(19) Europäisches Patentamt
European Patent Office
Office européen des brevets

(11) EP 3 002 748 A1

(12) EUROPEAN PATENT APPLICATION

(43) Date of publication:
06.04.2016 Bulletin 2016/14

(51) Int Cl.:
G09G 5/02 (2006.01)    G01J 3/46 (2006.01)
G01J 3/52 (2006.01)    G01J 3/50 (2006.01)
H04N 1/46 (2006.01)    H04N 9/68 (2006.01)
G06F 3/14 (2006.01)    H04N 1/60 (2006.01)

(21) Application number: 14306548.0

(22) Date of filing: 01.10.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Thomson Licensing
92130 Issy-les-Moulineaux (FR)

(72) Inventors:
• Fleureau, Julien
  35576 CESSON SEVIGNE (FR)

• Blonde, Laurent
  35576 CESSON SEVIGNE (FR)
• Huynh-Thu, Thai
  WOOLLAHRA, 2025NSW (AU)
• Gerard, Francois
  35576 CESSON SEVIGNE (FR)

(74) Representative: Huchet, Anne
Technicolor
1-5 rue Jeanne d'Arc
92130 Issy-Les-Moulineaux (FR)

(54) **A method for calibrating colors of at least one display device, and corresponding display device, computer program product and computer-readable medium**

(57) The disclosure relates to a method for calibrating colors of at least one display device, called a target device, from another display device, called a reference device, comprising:
- displaying on the target device at least one pixel with an encoded color ($C_i$), viewed by a user on the target device as a first perceived color ($P_Ti$), said encoded color ($C_i$) being viewed by the user on the reference device as a second perceived color ($P_Ri$);
- modifying the encoded color ($C_i$) on the target device, delivering a modified encoded color ($C_i'$) viewed by the user on the target device as a modified perceived color ($P_Ti'$), corresponding to the second perceived color ($P_Ri$);
- determining a set of at least one parameter of a first rendering function of the target device and a set of at least one parameter of a second rendering function of the reference device intended to minimize the distance between the modified perceived color on the target device and the second perceived color on the reference device;
- correcting an encoded color of at least another pixel to be displayed on the target device.

Fig. 1

**Description**

**1. Technical field**

The present disclosure relates to the rendering of colors on different display devices.

More specifically, the present disclosure offers a technique for calibrating colors of different display devices, enabling a user to perceive the same colors on the different devices.

The present disclosure is particularly suitable for calibrating different devices of a specific user at home, like his television and his tablet for example.

**2. Background art**

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

It is more and more common for a user to use several devices to display photos, videos or multimedia documents. For example, a user could display the same photos/videos on his tablet and on his TV screen at the same time.

However, when observing the content of the different display devices, it is very likely that the user won't see the same colors on both images and may be disappointed by such a situation.

Displayed color can show discrepancies in hue, saturation and luminance. For example, depending on the rendering technology (TV, PC, smartphone or tablet screens for example), on the viewing condition (dark or clear environment for example), and/or on the final user, a reference RGB color may be perceived differently on the different display devices.

Concerning the discrepancies due to rendering technologies, differences in the electro-optic transfer function (gamma), the black level and/or the color gamut may occur from one device to another. Such discrepancies may be especially observed between CRT ("Cathode Ray Tube"), plasma screens, or various categories of LCD ("Liquid Crystal Display) for TV screens, or between LCD or OLED ("Organic Light-Emitting Diode") for tablet or smartphones.

Complementary, concerning the differences between users, individual observers may also perceive colors differently due to their user-specific characteristics (observer metamerism) or due to visual impairment (partial color blindness or dichromacy for instance).

With the multiplication of display devices at home (TV, laptops, tablets, smartphones, etc), those color differences between display devices are more and more likely to be encountered and such differences should be corrected to enhance the user experience.

To tackle such issues, today, one should have to make use of color calibration techniques. Such techniques have been widely addressed in the literature, in standardization bodies (ICC, IEC) as well as in the industry (with dedicated companies like Genoa®, THX®, DataColor®, SpectralCal® or many others). Numerous "color management" procedures exist to calibrate displays, relative to a standard (e.g. ITU-R Recommendation BT.709 for HDTV or sRGB specification -IEC 61966-2-1:1999- for PC monitors).

To perform such calibrations, one should make use of a dedicated and expensive hardware (colorimeter / chromameter such as X-Rite Eye One Display®, ColorBUG® for consumers, or Konika Minolta® / PR Research professional color measurement products,... ) to calibrate each device independently and finally obtain a similar rendering on both.

This procedure is rarely well done and leads to a lack of adequate color calibration of the display devices. Moreover, the used sensor is setup for an average perceptive profile, which would not satisfy all users.

The present disclosure overcomes at least one of the above-mentioned shortcomings.

**3. Summary**

The present disclosure relates to a method for calibrating colors of at least one display device, called a target device, from another display device, called a reference device.

According to at least one embodiment of the invention, the method comprises:

- displaying on the target device at least one pixel with an encoded color, viewed by a user on the target device as a first perceived color,
  said encoded color being viewed by the user on the reference device as a second perceived color;
- modifying the encoded color on the target device, delivering a modified encoded color viewed by the user on the target device as a modified perceived color corresponding to the second perceived color;

- determining a set of at least one parameter of a first rendering function of the target device, called a first set of optimized parameters, and a set of at least one parameter of a second rendering function of the reference device, called a second set of optimized parameters, intended to minimize the distance between the modified perceived color on the target device and the second perceived color on the reference device;
- correcting an encoded color of at least another pixel to be displayed on the target device, using the first rendering function with the first set of optimized parameters and the second rendering function with the second set of optimized parameters.

The present disclosure thus proposes a new technique for calibrating colors of different display devices, enabling a user to perceive the same or quite the same colors on the different display devices (two or more). For example, the target device and the reference device belong to the group comprising: a TV, a tablet, a smartphone, a computer, etc.

To do so, an encoded color can be modified such that when it is rendered on the target device, the modified encoded color as perceived by the user on the target device has the same color than (or a color which is very close to) the encoded color as perceived by the user on the reference device.

One pair of encoded color / modified encoded color *(Ci, Ci')* is thus obtain for one pixel, and said pair or pairs are used to determine the first set of optimized parameters of the first rendering function, and the second set of optimized parameters of the second rendering function, by attempting to minimize the distance between the modified perceived color ($f_T(Ci')$) on the target device and the second perceived color ($f_R(Ci)$) on the reference device.

The first rendering function with the first set of optimized parameters and the second rendering function with the second set of optimized parameters can then be used to correct an encoded color of at least another pixel to be displayed on the target device.

In particular, the first rendering function with the first set of optimized parameters and the second rendering function with the second set of optimized parameters could also be used to correct an encoded color of at least another pixel to be displayed on the reference device.

The present disclosure thus proposes a user-specific and simultaneous calibration of the reference and the target devices, without any color measurement.

According to at least one embodiment, the invention thus proposes a new technique to make the colors of two display devices match from a given user's perception, with a user-friendly calibration technique. The proposed color calibration technique is thus user-specific.

Moreover, the proposed color calibration technique is not limited to the calibration of one display device. Indeed, it proposes a joint multi-screen calibration. It thus allows a complete calibration of two display devices at the same time (and not display by display), according to at least one embodiment.

Furthermore, the proposed color calibration technique does not focus on specific settings, like on the hue settings.

The calibration technique according to the disclosure is thus easy to implement, as it doesn't need any extra sensor or color measurement, well suited for a specific end-user, and less expensive than prior art techniques.

According to at least one embodiment, the step of modifying the encoded color on the target device comprises selecting, among at least two color patches displayed on the target device, the one whose perceived color is closest to the second perceived color according to the user.

According to this embodiment, information concerning the user's perception is gathered through an interactive process. In this way, the user can choose the color that correctly suits its perception.

For example, during the interactive step, different images or color patches can be proposed to the user and displayed on the reference device and on the target device. The user can modify, on the target device, the current image/patch displayed, so that the modified perceived color becomes similar to the second perceived color displayed on the reference device, from the user's perception.

According to at least one embodiment, the step of determining the first set of optimized parameters of the first rendering function and the second set of optimized parameters of the second rendering function comprises:

- determining a first set of initial parameters of the first rendering function,
- determining a second set of initial parameters of the second rendering function,
- adjusting the first set of initial parameters and the second set of initial parameters, to minimize the distance between the modified perceived color on the target device and the second perceived color on the reference device, for at least one pair of encoded color and modified encoded color obtained for a pixel, delivering the first set of optimized parameters and the second set of optimized parameters.

According to this embodiment, known rendering models or functions are used to switch from the encoded colors space to the perceived colors space. However, instead of using sets of initial parameters of the rendering functions, which enable color calibration for an average user, the disclosure proposes to determine sets of optimized parameters, which enable color calibration for a specific user.

In this way, the color calibration's technique well suits the specific user's perception. According to at least one embodiment, the distance is computed by determining one of:

- the sum of squared difference (Euclidean norm),
- the sum of absolute difference (Manhattan norm),
- the maximum of absolute difference (Maximum norm),

between the second perceived color on the reference device and the modified perceived color on the target device, for at least one pair of encoded color and modified encoded color obtained for a pixel.

Such a distance can be directly computed in the XYZ perceptive color space, as an Euclidean metric.

According to at least one embodiment, the distance is computed in the UVW perceptive color space.

According to this embodiment, the distance can be computed in the UVW perceptive color space, possibly after conversion from the XYZ perceptive color space to the UVW perceptive color space.

As the UVW perceptive color space is isotropic, the computations are more consistent.

According to a specific feature of the disclosure, at least one of the first rendering function and the second rendering function is a transfer function expressed by:

$$\begin{bmatrix} X \\ Y \\ Z \end{bmatrix} = f\left(\begin{bmatrix} R \\ G \\ B \end{bmatrix}\right) = M \begin{bmatrix} g_{\alpha_1,\beta_1,\gamma_1}(R) \\ g_{\alpha_2,\beta_2,\gamma_2}(G) \\ g_{\alpha_3,\beta_3,\gamma_3}(B) \end{bmatrix}$$

with $g_{\alpha_i,\beta_i,\gamma_i}(V) = \left(\frac{V+\alpha_i}{\beta_i}\right)^{\gamma_i}$ and $M = \begin{pmatrix} m_{11} & m_{12} & m_{13} \\ m_{21} & m_{22} & m_{23} \\ m_{31} & m_{32} & m_{33} \end{pmatrix}$ the first and/or second set of optimized parameters to determine.

According to a first example of rendering function(s) between the sRGB color space and the XYZ perceptive color space, the set of initial parameters is given by:

$$M = M_0 = \begin{pmatrix} 0.4124 & 0.3576 & 0.1805 \\ 0.2126 & 0.7152 & 0.0722 \\ 0.0193 & 0.1192 & 0.9505 \end{pmatrix}$$

$$\alpha_1 = \alpha_2 = \alpha_3 = \alpha_0 = 0.055$$

$$\beta_1 = \beta_2 = \beta_3 = \beta_0 = 1.055$$

$$\gamma_1 = \gamma_2 = \gamma_3 = \gamma_0 = 2.2$$

According to a second example of rendering function(s) between the BT-709 color space (expressed in RGB) and the XYZ perceptive color space, the set of initial parameters is given by:

$$M = M_0 = \begin{pmatrix} 0.412 & 0.358 & 0.180 \\ 0.219 & 0.715 & 0.072 \\ 0.019 & 0.119 & 0.950 \end{pmatrix}$$

$$\alpha_1 = \alpha_2 = \alpha_3 = \alpha_0 = 0.099$$

$$\beta_1 = \beta_2 = \beta_3 = \beta_0 = 1.099$$

$$\gamma_1 = \gamma_2 = \gamma_3 = \gamma_0 = 2.2$$

According to at least one embodiment, the step of correcting an encoded color of at least another pixel to be displayed on the target device implements, for an input encoded color (Cinput):

- applying the second rendering function of the reference device, with the second set of optimized parameters, to the input encoded color, delivering an input perceived color,
- applying an inverse function of the first rendering function of the target device, with the first set of optimized parameters, to the input perceived color, delivering an output encoded color (Coutput).

Once the first and second set of optimized parameters are determined, they could be used to correct the encoded colors of other pixels. The whole content can thus easily and rapidly be calibrated according to the disclosed invention.

In particular, the first rendering function is a transfer function between a first color space and a first perceptive color space, and the second rendering function is a transfer function between a second color space and a second perceptive color space.

For example, at least one of the first color space and the second color space belongs to the group comprising:

- RGB color space (sRGB color space or adobe color space),
- ROMM RGB color space,
- Apple RGB color space,
- NTSC RGB color space,
- EBU RGB (CCIR 601) color space,
- ITU-R BT.709 color space.

The attributes of the standard RGB color spaces are for example summarized in the document "Standard RGB Color Spaces", Sabine Süsstrunk et al. (1999).

For example, at least one of the first perceptive color space and the second perceptive color space belongs to the group comprising:

- XYZ perceptive color space,
- UVW perceptive color space.

The disclosure also relates to a display device, called a target device, comprising a module for calibrating colors from another display device, called a reference device, wherein the display device comprises:

- a screen for displaying at least one pixel with an encoded color,
  said encoded color being viewed by a user on the target device as a first perceived color, and being viewed by the user on the reference device as a second perceived color;
- a module configured to modify the encoded color, delivering a modified encoded color, said modified encoded color being viewed by the user on the target device as a modified perceived color, corresponding to the second perceived color;
- a module configured to determine a set of at least one parameter of a first rendering function of the target device, called a first set of optimized parameters, and a set of at least one parameter of a second rendering function of the reference device, called a second set of optimized parameters, intended to minimize the distance between the modified perceived color on the target device and the second perceived color on the reference device;

a module configured to correct an encoded color of at least another pixel to be displayed on the target device, using the first rendering function with the first set of optimized parameters and the second rendering function with the second set of optimized parameters.

Such a display device can be especially adapted to implement the calibrating method described here above. It could of course comprise the different characteristics pertaining to the calibrating method according to an embodiment of the disclosure, which can be combined or taken separately. Thus, the characteristics and advantages of the display device are the same as those of the calibrating method and are not described in more ample detail.

Another aspect of the disclosure pertains to a computer program product downloadable from a communication network and/or recorded on a medium readable by computer and/or executable by a processor comprising software code adapted to perform a method for calibrating colors of at least one display device, wherein the software code is adapted to perform the steps of the calibrating method described above.

In addition, the present disclosure concerns a non-transitory computer readable medium comprising a computer program product recorded thereon and capable of being run by a processor, including program code instructions for implementing the steps of the calibrating method previously described.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

## 4. Brief description of the drawings

The disclosure will be better understood and illustrated by means of the following embodiment and execution examples, in no way limitative, with reference to the appended figures on which:

- Figure 1 is a flow chart illustrating the main steps of a method for calibrating colors according to the disclosure;
- Figure 2 illustrate an example of implementation of the invention for the calibration of a tablet, using a TV;
- Figures 3A and 3B illustrates the rendering functions of the display devices of Figure 2 at an initial state and at the end of the calibration;
- Figure 4 is a block diagram of an example of a display device implementing the method for calibrating colors according to the example of Figure 1.

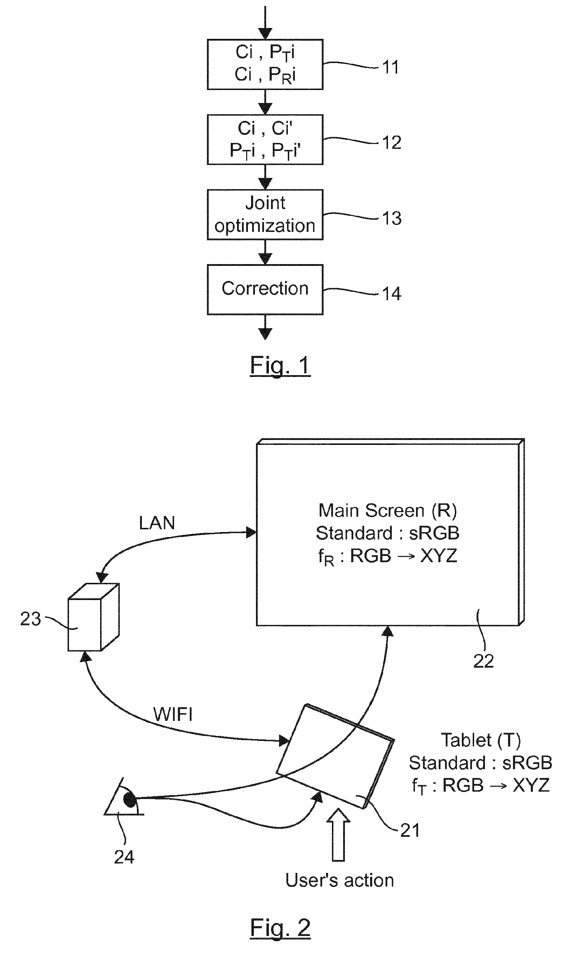

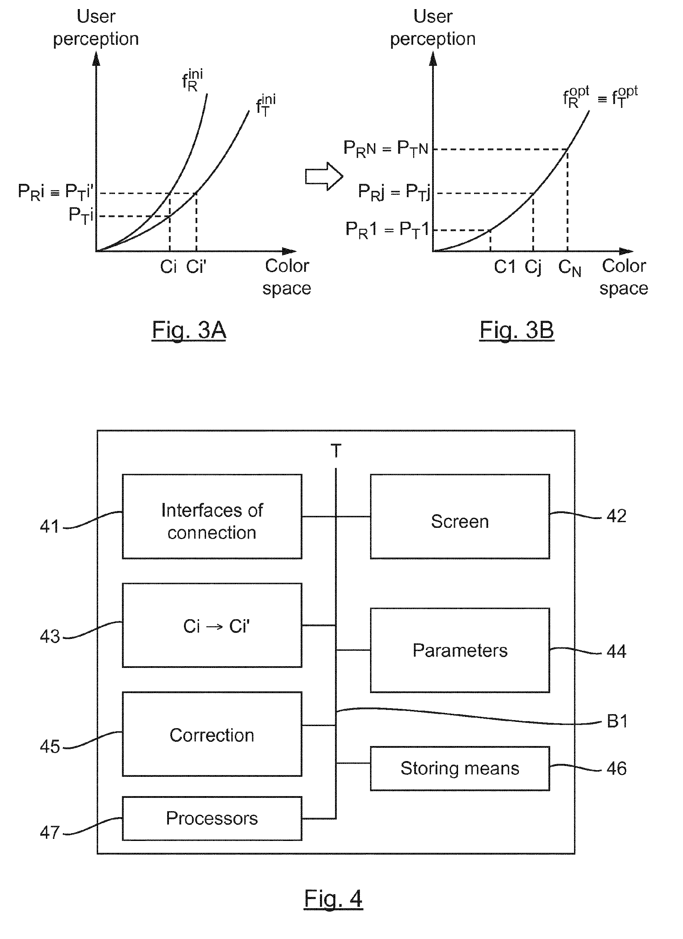

In Figures 1 and 4, the represented blocks are purely functional entities, which do not necessarily correspond to physically separate entities. Namely, they could be developed in the form of software, hardware, or be implemented in one or several integrated circuits, comprising one or more processors.

Wherever possible, the same reference numerals will be used throughout the figures to refer to the same or like parts.

## 5. Description of embodiments

It is to be understood that the figures and descriptions of the present disclosure have been simplified to illustrate elements that are relevant for a clear understanding of the present disclosure, while eliminating, for purposes of clarity, many other elements found in typical display devices.

The disclosure relates to a color calibration technique, enabling to calibrate a first display device, called a target device, using a second display device, called a reference device, or to calibrate simultaneously both display devices, according to a specific/end user's perception.

The general principle of the disclosure relies on a first phase enabling to determine at least one pair of encoded color/modified encoded color enabling to retrieve perceived color matches between the target device and the reference device, a second phase enabling to determine, for each device, rendering functions with sets of optimized parameters adapted to the user's perception, and a third phase enabling to calibrate the target device.

The main steps of a method for calibrating at least one target device from a reference device according to an embodiment of the invention are illustrated in Figure 1.

Let's consider that a specific user wants to calibrate the colors of his tablet (target device), with the colors of his TV (reference device).

During a first step 11, at least one pixel i with an encoded color Ci is displayed on the target device. The specific user views encoded color Ci on the target device with a first perceived color $P_T i$.

A pixel i with the same encoded color Ci is also displayed on the reference device. The specific user views the encoded color Ci on the reference device with a second perceived color $P_R i$.

During a second step 12, the encoded color Ci is modified and displayed on the target device. The specific user views the modified encoded color Ci' on the target device with a modified perceived color $P_T i'$, which is similar or identical to the second perceived color $P_R i$ ($P_T i' \equiv P_R i$).

In other words, the encoded color is modified in order to be perceived as the same (or quite the same) color on the target device and on the reference device, by the specific user.

One pair of encoded color Ci / modified encoded color Ci' is thus determined for one pixel i. Several pairs of encoded color / modified encoded color could be determined for a restricted number of visual color matches between the target device and the reference device.

During a third step 13, a first set of optimized parameters is determined for the first rendering function between the encoded color space and the perceived color space of the target device. A second set of optimized parameters is also determined for the second rendering function between the encoded color space and the perceived color space of the reference device. The sets of optimized parameters could be determined jointly, by trying to minimize the distance between the modified perceived color $P_T i' = f_T(Ci')$ on the target device and the second perceived color $P_R i = f_R(Ci)$ on the reference device. The resolution of the joint optimization problem can use the pair(s) of encoded color / modified encoded color previously determined to automatically infer the user-specific parameters of a generic model of color adaptation for each display device.

Then, during a fourth step 14, an encoded color Cj of at least another pixel j to be displayed on the target device ($j \neq i$) could be corrected, using the first rendering function with the first set of optimized parameters and the second rendering function with the second set of optimized parameters.

The encoded color Cj of the pixel j to be displayed on the reference device could also be corrected using the first rendering function with the first set of optimized parameters and the second rendering function with the second set of optimized parameters.

An example of implementation of the invention is now presented in Figures 2, 3A and 3B.

Let's consider again that a specific/end user wants to calibrate the colors of his tablet 21 (target device), with the colors of his TV 22 (reference device or main screen), and that both display devices follows the sRGB standard. One or both of the display devices could obviously follow a different standard, like the BT-709 recommendation. For example, the tablet 21 and the TV 22 are networked with a remote server 23 in a LAN. The table 21 can communicates with the remote server 23 using Wi-Fi.

The first rendering function between the encoded color space and the perceived color space of the target device 21, known as $f_T$, is thus a transfer function between sRGB encoded color space and XYZ perceptive color space. Such first rendering function with a set of initial parameters is named $f_T^{ini}$.

The second rendering function between the encoded color space and the perceived color space of the reference device 22, known as $f_R$, is also a transfer function between sRGB encoded color space and XYZ perceptive color space. Such second rendering function with a set of initial parameters is named $f_R^{ini}$.

Let's also consider that some parts of a same content, coming from the remoter server 23 for example, are displayed on both the tablet 21 and the TV screen 22, watched by the end-user 24.

In practice, with commercial products, the two display devices do not conform to the standards and colors appear different while displaying a same content. Even if both display devices are supposed to follow a color standard, considering for example the screen defects, the inter-subjects differences and/or the current viewing environment, the common content between the display devices won't be seen in a same way by the end-user 24.

To ensure a valid color correspondence between the two display devices, and adapt the rendering to the end-user 24, a calibration technique according to an embodiment of the invention is implemented.

According to the example illustrated in figure 2, a first interactive phase is implemented to determine at least one pair of encoded color / modified encoded color *(Ci, Ci')*.

During the interactive phase, different images or color patches are successively proposed to the user and displayed on both the tablet 21 and the TV screen 22. Such image could be of the HDR type (High Dynamic Range). On his tablet, the user is asked, for instance through a dedicated application, to modify a current image/patch displayed (perceived by the user as $P_T i$), so that the rendered color after modification (perceived by the user as $P_T i'$) becomes as close as possible to the one displayed on the TV (perceived by the user as $P_R i$), from his point of view and/or perception ($P_T i' \equiv P_R i$).

For example, an interface allowing an interactive and iterative navigation in the color space HSV (Hue, Saturation or Value) may be used to perform this adaptation. However, any other kind of interface allowing a manual mapping of the target device color to the reference device color may be used.

According to this embodiment, during a first iteration ($i = 1$), an encoded color C1 is picked out and displayed on the target device 21 and on the reference device 22. The user perceives the encoded color C1 with two different perceptions on the different devices. For example, the user 24 perceives the encoded color C1 as $P_T 1$ on the target device 21 and as $P_R 1$ on the reference device 22. The user 24 can adapt the encoded color C1 on the target device 21, so that he perceives the adapted/modified encoded color C1' as $P_T 1'$ on the target device 21, with $P_T 1'$ identical to $P_R 1$

or similar to $P_R1$ to the user's perception, as illustrated in figure 3A.

A first pair of encoded color C1/modified encoded color C1' is thus determined at the end of the first iteration.

Several iterations could be implemented, to obtain several pairs of encoded color Ci/modified encoded color Ci'.

For example, at the end of the interactive phase, one thus have a list of N pairs $(Ci, Ci')_{1 \leq i \leq N}$, where $Ci = \{Ri, Gi, Bi\}$ is the encoded color proposed at the beginning of the $i^{th}$ interactive step and $Ci' = \{Ri', Gi', Bi'\}$ is the corresponding modified encoded color, adapted by the user on the target device. For example, N = 10. More or less pairs of encoded color/modified encoded color could be determined, depending for example on the display devices quality. According to the example illustrated in Figure 2, a second phase of optimization is implemented to determine a set of optimized parameters for the first and second rendering functions. The first rendering function with a set of optimized parameters is named $f_T^{opt}$ and the second rendering function with a set of optimized parameters is named $f_R^{opt}$, with $f_T^{opt} \equiv f_R^{opt}$.

More specifically, as already explained, each display device 21, 22 is supposed to approximately follow an sRGB rendering model or function, which means that a given encoded color $C = \{R, G, B\}$ is mapped into the XYZ perceptive space by:

$$\begin{bmatrix} X \\ Y \\ Z \end{bmatrix} = f\left(\begin{bmatrix} R \\ G \\ B \end{bmatrix}\right) = M \begin{bmatrix} g_{\alpha_1,\beta_1,\gamma_1}(R) \\ g_{\alpha_2,\beta_2,\gamma_2}(G) \\ g_{\alpha_3,\beta_3,\gamma_3}(B) \end{bmatrix}$$

with

$$g_{\alpha_i,\beta_i,\gamma_i}(V) = \left(\frac{V+\alpha_i}{\beta_i}\right)^{\gamma_i} \text{ and } M = \begin{pmatrix} m_{11} & m_{12} & m_{13} \\ m_{21} & m_{22} & m_{23} \\ m_{31} & m_{32} & m_{33} \end{pmatrix}$$

According to IEC 61966-2-1:1999, the linear part of the sRGB model could be neglected for small luminosities.

Such model or transfer function is defined by the parameters $M, \alpha_i, \beta_i, \gamma_i, 1 \leq i \leq 3$, with:

- M the matrix which deals with the weighting of each color channel in the color transform model;
- $\alpha_i$ a parameter related to the rendered black level,
- $\beta_i$ a scaling factor related to the shape of the display rendering profile regarding different levels of luminosity for a given component,
- $\gamma_i$ an exponential factor related to the shape of the display rendering profile regarding different levels of luminosity for a given component.

If the target device 21 and the reference device 22 were perfectly calibrated and if the user 24 was exactly an "average" user, we should have, following the standard recommendations:

$$M = M_0 = \begin{pmatrix} 0.4124 & 0.3576 & 0.1805 \\ 0.2126 & 0.7152 & 0.0722 \\ 0.0193 & 0.1192 & 0.9505 \end{pmatrix}$$

$$\alpha_1 = \alpha_2 = \alpha_3 = \alpha_0 = 0.055$$

$$\beta_1 = \beta_2 = \beta_3 = \beta_0 = 1.055$$

$$\gamma_1 = \gamma_2 = \gamma_3 = \gamma_0 = 2.2$$

However, those conditions are generally not met and those "standard" or initial values are not adapted to the end-user perception, to the current viewing environment and/or to the possible defects of the display device.

Assuming that the shape of the model (function f described before) is however preserved, each display device has consequently its own rendering model with the corresponding parameters.

For example, the target device 21 has a first rendering function $f_T$ with the parameters $Param_T = \left\{ M^T, \left( \alpha_i^T, \beta_i^T, \gamma_i^T \right)_{1 \leq i \leq 3} \right\}$. The reference device 22 has a second rendering function $f_R$ with the parameters $Param_R = \left\{ M^R, \left( \alpha_i^R, \beta_i^R, \gamma_i^R \right)_{1 \leq i \leq 3} \right\}$.

If the target device 21, respectively the reference device 22, is additive, which is generally the case considering the physical nature of the renderer (each pixel color is the sum of the three primary channels rendered through three different emitters), those sets of parameters may be reduced using the following relations:

$$\alpha_1^T = \alpha_2^T = \alpha_3^T, \beta_1^T = \beta_2^T = \beta_3^T, \text{ and } \gamma_1^T = \gamma_2^T = \gamma_3^T$$

$$\alpha_1^R = \alpha_2^R = \alpha_3^R, \beta_1^R = \beta_2^R = \beta_3^R, \text{ and } \gamma_1^R = \gamma_2^R = \gamma_3^R$$

The number of parameters to compute is therefore reduced.

According to at least one embodiment of the invention, the pair or pairs $(Ci, Ci')_{1 \leq i \leq N}$ could be used to determine the optimal values of each parameters involved in the first rendering function $f_T$ and the second rendering function $f_R$. In other words, the optimization phase makes use of the pair or pairs $(Ci, Ci')_{1 \leq i \leq N}$ to modify the parameters of the first and second rendering functions so that the encoded colors Ci may be perceived identically or similarly on the target and reference devices.

For example, we aim at determining a first set of optimized parameters of the first rendering function, and a second set of optimized parameters of the second rendering function, intended to minimize the distance between the modified perceived color $f_T(Ci')$ on the target device and the second perceived color $f_R(Ci)$ on the reference device.

In other words, the optimized parameters are assumed to minimize the following cost function:

$$\left( Param_R^{opt}, Param_T^{opt} \right) = argmin \left( \mathcal{F}_{Param_R, Param_T} \left( (Ci, Ci')_{1 \leq i \leq N} \right) \right)$$

with

$$\mathcal{F}_{Param_R, Param_T} \left( (Ci, Ci')_{1 \leq i \leq N} \right) = \sum_{i=1}^{N} d^2 \left( f_R(Ci), f_T(Ci') \right).$$

According to another embodiment, the set of parameters are not "optimized", but "sub-optimized", as they do not permit to reach a minimum for the cost function, but only to reduce the cost function.

The function d involved in the computation of $F_{Param_R, Param_T}$ is a distance function in the XYZ perceptive color space. It can be directly chosen as an Euclidean metric and computed by determining one of the sum of squared difference (SSD), the sum of absolute difference (SAD), the maximum of absolute difference, or other metrics between the second perceived color on the reference device $f_R(Ci)$ and the modified perceived color on the target device $f_T(Ci')$, for at least one pair of $(Ci, Ci')_{1 \leq i \leq N}$.

To make the computations easier, it is possible to convert the XYZ perceptive color space to the UVW perceptive space, using Macadam ellipses diagram. Indeed, the XYZ perceptive color space is not perfectly isotropic. Other metrics may be used, such as the one involved in the (U',V',W') space construction [CIE 1964 UVW color space], which are easiest to compute.

Alternatively, LAB or other uniform color spaces can be selected as well, with another formulation for the optimization process.

In a quite general manner, one may introduce the matrix D, such as:

$$D = \begin{pmatrix} d_{11} & d_{12} & d_{13} \\ d_{21} & d_{22} & d_{23} \\ d_{31} & d_{32} & d_{33} \end{pmatrix}$$

and write $d^2(A, B) = (B - A)^T D^T D (B - A)$, where:

- $D = \begin{pmatrix} 1 & 0 & 0 \\ 0 & 1 & 0 \\ 0 & 0 & 1 \end{pmatrix}$ for an Euclidean metric, or

- $D = \begin{pmatrix} 4/9 & 0 & 0 \\ 0 & 1 & 0 \\ -1/3 & 2/3 & 1/3 \end{pmatrix}$ for a (U',V',W')-based metric.

The Jacobian $\frac{\partial \mathcal{F}}{\partial \xi}$ of $F_{Param_R, Param_T}$ is analytically tractable for any parameter $\xi$ and the function $F_{Param_R, Param_T}$ may be then minimized using classical descent algorithms starting from the sets of initial parameters

$$Param_T^{ini} = Param_R^{ini} = \{M_0, (\alpha_0, \beta_0, \gamma_0)\}.$$

For example, BFGS (Broyden-Fletcher-Goldfarb-Shanno) algorithm could be used.

Assuming that the optimized parameters are close to the initial solution, one can expect to find rapidly the global optimum.

Alternative strategies making use of meta-heuristic algorithms of optimization (evolutionary algorithm, particle swarms ... ) may be also considered to avoid this assumption.

Sets of optimized parameters are in this way estimated for the first rendering function $(Param_T^{opt})$ and for the second rendering function $(Param_R^{opt})$, and considered, to the end-user perception, as a good fit for the input color pairs $(Ci, Ci')_{1 \le i \le N}$.

The first $f_T$ and second $f_R$ rendering functions, with sets of optimized parameters, could thus generalize this correspondence to the whole color space, possibly for each display device.

It should be noted that as the first $f_T$ and second $f_R$ rendering functions are color calibration models linking a signal space to a visual space, the two display devices are characterized by the same operation.

It should also be noted that each display device could follow a different standard. For example, the target device could follow a sRGB standard and the reference device could follow a BT-709 or BT-2020 recommendation. In this case, the first rendering function and the second rendering function do not follow the same rendering model, but the same optimization phase could be implemented by determining a set of optimized parameters for the first rendering function and a different set of optimized parameters for the second rendering function.

For example, if the target device and/or the reference device follow the BT-709 recommendation, the same rendering function $\begin{bmatrix} X \\ Y \\ Z \end{bmatrix} = f\left(\begin{bmatrix} R \\ G \\ B \end{bmatrix}\right) = M \begin{bmatrix} g_{\alpha_1,\beta_1,\gamma_1}(R) \\ g_{\alpha_2,\beta_2,\gamma_2}(G) \\ g_{\alpha_3,\beta_3,\gamma_3}(B) \end{bmatrix}$ would be used after BT-709 to RGB conversion, with

$g_{\alpha_i,\beta_i,\gamma_i}(V) = \left(\frac{V+\alpha_i}{\beta_i}\right)^{\gamma_i}$ and $M = \begin{pmatrix} m_{11} & m_{12} & m_{13} \\ m_{21} & m_{22} & m_{23} \\ m_{31} & m_{32} & m_{33} \end{pmatrix}$, but with different initial parameters:

$$M = M_0 = \begin{pmatrix} 0.412 & 0.358 & 0.180 \\ 0.219 & 0.715 & 0.072 \\ 0.019 & 0.119 & 0.950 \end{pmatrix}$$

$$\alpha_1 = \alpha_2 = \alpha_3 = \alpha_0 = 0.099$$

$$\beta_1 = \beta_2 = \beta_3 = \beta_0 = 1.099$$

$$\gamma_1 = \gamma_2 = \gamma_3 = \gamma_0 = 2.2.$$

Then, during a third phase, calibration of others colors on the target device (and possibly on the reference device) could be implemented.

To do so, the present disclosure implements, according to at least one embodiment, a step of correcting an encoded color of at least another pixel to be displayed on the target device, comprising for an input encoded color:

- applying the second rendering function $f_R$ of the reference device, with the second set of optimized parameters, to the input encoded color, delivering an input perceived color,
- applying an inverse function of the first rendering function $f_T^{-1}$ of the target device, with the first set of optimized parameters, to the input perceived color, delivering an output encoded color.

In other words, once the sets of optimized parameters have been computed, for any input encoded color $C_j^{input}$ which should be displayed on the display devices 21 and/or 22, the following correction has to be applied on the target device 21, to make the colors rendered on the tablet 21 looking similar to the colors rendered on the TV 22, for the specific user and for a given environment:

$$C_j^{output} = f_T^{opt^{-1}} \circ f_R^{opt}\left(C_j^{input}\right)$$

where $f_T^{opt^{-1}}$ is the reciprocal function of $f_T^{opt}$, which may easily and analitically computed.

One could also consider a slightly different case where the input data belong to a HDR (High Dynamic Range) color space and where at least one of the reference and target devices is a regular LDR (Low Dynamic Range) renderer. In this case, a complementary specific step called Tone Mapping has to be applied to the content when performing the color calibration process. This Tone Mapping step casts the HDR luminance of the input content to a regular LDR one. Such an operation is generally done by the mean of dedicated functions. As an example, among the global tone mapping methods, "gamma compression" transforms the LDR input luminosity into the HDR output luminosity $V_{out}$ by the mean of the relation $V_{out} = A\, V_{in}^{\gamma}$ where $0<A$ and $0<\gamma<1$ are two parameters to adjust.

In the context of joint color calibration, such parameters could be incorporated in the optimization phase to make the tone mapping operations consistent over the different screens.

Finally note that in the opposite context where one has to pass from a LDR to HDR content, a reverse operations called Inverse Tone Mapping has also to be complementarily applied. Such an operator also embeds specific parameters that could be as well incorporated in the global process of joint color calibration.

Figure 4 illustrates an example of a display device comprising a module for calibrating colors according to an embodiment of the disclosure.

Such a display device T comprises at least:

- one or more interfaces of connection 41 (wired and/or wireless, as for example Wi-Fi, Ethernet, ADSL, Cable, Mobile and/or Broadcast (e.g. DVB, ATSC) interface);
- a screen 42 for displaying at least one pixel with an encoded color, said encoded color being viewed by a user on the target device as a first perceived color, and being viewed by the user on the reference device as a second perceived color;
- a module for calibrating colors comprising:

   o a module 43 configured to modify the encoded color, delivering a modified encoded color, said modified encoded color being viewed by the user on the target device as a modified perceived color, corresponding to the second perceived color (i.e. looking similar to the second perceived color, to the user's point of view) ;
   o a module 44 configured to determine a first set of optimized parameters the first rendering function of the target device and a second set of optimized parameters of the second rendering function of the reference device, intended to minimize the distance between the modified perceived color on the target device and the second perceived color on the reference device;
o a module 45 configured to correct an encoded color of at least another pixel to be displayed on the target device, using the first rendering function with the first set of optimized parameters and the second rendering function with the second set of optimized parameters;

- storing means 46, such as a volatile memory;
- one or more processors 47 for executing the applications and programs stored in a nonvolatile memory of the display device T;
- an internal bus B1 to connect the various modules and all means well known to the skilled in the art for performing the generic display device functionalities.

The flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

As will be appreciated by one skilled in the art, aspects of the present principles can be embodied as a system, method, computer program or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit," "module", or "system." Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer disc, a hard disc, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing.

**Claims**

1. A method for calibrating colors of at least one display device, called a target device, from another display device, called a reference device,
comprising:

   - displaying on the target device at least one pixel with an encoded color (Ci), viewed by a user on the target device as a first perceived color ($P_T$i),
   said encoded color (Ci) being viewed by the user on the reference device as a second perceived color ($P_R$i);
   - modifying the encoded color (Ci) on the target device, delivering a modified encoded color (Ci') viewed by the user on the target device as a modified perceived color ($P_T$i'), corresponding to the second perceived color ($P_R$i);
   - determining a set of at least one parameter of a first rendering function of the target device, called a first set of optimized parameters, and a set of at least one parameter of a second rendering function of the reference device, called a second set of optimized parameters, intended to minimize the distance between the modified perceived color ($f_T$(Ci')) on the target device and the second perceived color ($f_R$(Ci)) on the reference device;

- correcting an encoded color of at least another pixel to be displayed on the target device, using the first rendering function with the first set of optimized parameters and the second rendering function with the second set of optimized parameters.

2. The method according to claim 1, wherein the step of modifying the encoded color on the target device comprises selecting, among at least two color patches displayed on the target device, the one whose perceived color is closest to the second perceived color according to the user.

3. The method according to anyone of claims 1 and 2, wherein the step of determining the first set of optimized parameters of the first rendering function and the second set of optimized parameters of the second rendering function comprises:

- determining a first set of initial parameters of the first rendering function,
- determining a second set of initial parameters of the second rendering function,
- adjusting the first set of initial parameters and the second set of initial parameters, to minimize the distance between the modified perceived color on the target device and the second perceived color on the reference device, for at least one pair of encoded color and modified encoded color obtained for a pixel, delivering the first set of optimized parameters and the second set of optimized parameters.

4. The method according to anyone of claims 1 to 3, wherein the distance is computed by determining one of:

- the sum of squared difference,
- the sum of absolute difference,
- the maximum of absolute difference,

between the second perceived color on the reference device and the modified perceived color on the target device, for at least one pair of encoded color and modified encoded color obtained for a pixel.

5. The method according to anyone of claims 1 to 4, wherein the distance is computed in the UVW perceptive color space.

6. The method according to anyone of claims 1 to 5, wherein at least one of the first rendering function and the second rendering function is a transfer function expressed by:

$$\begin{bmatrix} X \\ Y \\ Z \end{bmatrix} = f\left(\begin{bmatrix} R \\ G \\ B \end{bmatrix}\right) = M \begin{bmatrix} g_{\alpha_1,\beta_1,\gamma_1}(R) \\ g_{\alpha_2,\beta_2,\gamma_2}(G) \\ g_{\alpha_3,\beta_3,\gamma_3}(B) \end{bmatrix}$$

with $g_{\alpha_i,\beta_i,\gamma_i}(V) = \left(\frac{V+\alpha_i}{\beta_i}\right)^{\gamma_i}$ and $M = \begin{pmatrix} m_{11} & m_{12} & m_{13} \\ m_{21} & m_{22} & m_{23} \\ m_{31} & m_{32} & m_{33} \end{pmatrix}$ the first and/or second set of optimized parameters to determine.

7. The method according to anyone of claims 1 to 6, wherein the step of correcting an encoded color of at least another pixel to be displayed on the target device implements, for an input encoded color (Cinput):

- applying the second rendering function of the reference device, with the second set of optimized parameters, to the input encoded color, delivering an input perceived color,
- applying an inverse function of the first rendering function of the target device, with the first set of optimized parameters, to the input perceived color, delivering an output encoded color (Coutput).

8. The method according to anyone of claims 1 to 7, wherein the first rendering function is a transfer function between a first color space and a first perceptive color space, and the second rendering function is a transfer function between a second color space and a second perceptive color space, wherein at least one of the first color space and the second color space belongs to the group comprising:

- RGB color space,
- ROMM RGB color space,
- Apple RGB color space,
- NTSC RGB color space,
- EBU RGB (CCIR 601) color space,
- ITU-R BT.709 color space,

and wherein at least one of the first perceptive color space and the second perceptive color space belongs to the group comprising:

- XYZ perceptive color space,
- UVW perceptive color space.

9. A display device, called a target device, comprising a module for calibrating colors from another display device, called a reference device,
wherein the display device comprises:

- a screen for displaying at least one pixel with an encoded color (Ci),
said encoded color (Ci) being viewed by a user on the target device as a first perceived color ($P_Ti$), and being viewed by the user on the reference device as a second perceived color ($P_Ri$);
- a module configured to modify the encoded color (Ci), delivering a modified encoded color (Ci'),
said modified encoded color being viewed by the user on the target device as a modified perceived color ($P_Ti'$), corresponding to the second perceived color ($P_Ri$);
- a module configured to determine a set of at least one parameter of a first rendering function of the target device, called a first set of optimized parameters, and a set of at least one parameter of a second rendering function of the reference device, called a second set of optimized parameters, intended to minimize the distance between the modified perceived color ($f_T(Ci')$) on the target device and the second perceived color ($f_R(Ci)$) on the reference device;
- a module configured to correct an encoded color of at least another pixel to be displayed on the target device, using the first rendering function with the first set of optimized parameters and the second rendering function with the second set of optimized parameters.

10. A computer program product downloadable from a communication network and/or recorded on a medium readable by computer and/or executable by a processor comprising software code adapted to perform a method for calibrating colors of at least one display device, called a target device, from another display device, called a reference device, wherein the software code is adapted to perform:

- displaying on the target device at least one pixel with an encoded color (Ci), viewed by a user on the target device as a first perceived color ($P_Ti$),
said encoded color (Ci) being viewed by the user on the reference device as a second perceived color ($P_Ri$);
- modifying the encoded color (Ci) on the target device, delivering a modified encoded color (Ci') viewed by the user on the target device as a modified perceived color ($P_Ti'$), corresponding to the second perceived color ($P_Ri$);
- determining a set of at least one parameter of a first rendering function of the target device, called a first set of optimized parameters, and a set of at least one parameter of a second rendering function of the reference device, called a second set of optimized parameters, intended to minimize the distance between the modified perceived color ($f_T(Ci')$) on the target device and the second perceived color ($f_R(Ci)$) on the reference device;
- correcting an encoded color of at least another pixel to be displayed on the target device, using the first rendering function with the first set of optimized parameters and the second rendering function with the second set of optimized parameters.

11. A non-transitory computer-readable medium comprising a computer program product recorded thereon and capable of being run by a processor, including program code instructions for implementing the steps of the method for calibrating colors of at least one display device, called a target device, from another display device, called a reference device, according to at least one of claims 1 to 8.

$$C_i, P_T i$$
$$C_i, P_R i$$
— 11

$$C_i, C_i'$$
$$P_T i, P_T i'$$
— 12

Joint
optimization — 13

Correction — 14

<u>Fig. 1</u>

Main Screen (R)
Standard : sRGB
$f_R$ : RGB → XYZ

LAN

23

22

WIFI

Tablet (T)
Standard : sRGB
$f_T$ : RGB → XYZ

21

24

User's action

<u>Fig. 2</u>

User
perception

$f_R^{ini}$

$f_T^{ini}$

$P_Ri \equiv P_Ti'$
$P_Ti$

Ci  Ci'

Color
space

Fig. 3A

User
perception

$f_R^{opt} \equiv f_T^{opt}$

$P_RN = P_TN$

$P_Rj = P_Tj$

$P_R1 = P_T1$

C1  Cj  $C_N$

Color
space

Fig. 3B

T

| Interfaces of connection | 41 |

Screen — 42

| Ci → Ci' | 43 |

Parameters — 44

| Correction | 45 |

B1

Storing means — 46

| Processors | 47 |

Fig. 4

Europäisches
Patentamt

European
Patent Office

Office européen
des brevets

## EUROPEAN SEARCH REPORT

Application Number

EP 14 30 6548

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/222412 A1 (PERTIERRA JUAN P [US]) 29 August 2013 (2013-08-29) * paragraph [0022] - paragraph [0028] * * paragraph [0036] - paragraph [0041] * * paragraph [0011] * ----- | 1-3,8-11 | INV. G09G5/02 G01J3/46 G01J3/52 G01J3/50 H04N1/46 |
| X | US 2013/154903 A1 (KIM JIN SEO [KR]) 20 June 2013 (2013-06-20) * paragraph [0024] - paragraph [0026] * * paragraph [0032] - paragraph [0035] * * paragraph [0042] - paragraph [0049] * ----- | 1,2,9-11 | H04N9/68 G06F3/14 H04N1/60 |
| X | US 5 579 031 A (LIANG ZHONGJIE [US]) 26 November 1996 (1996-11-26) * column 4, line 51 - column 5, line 46 * * column 6, line 19 - column 7, line 58 * ----- | 1,9-11 | |
| X | US 2011/249015 A1 (LONKAR AMRUTA SATISH [IN] LONKAR AMRUTA S [IN]) 13 October 2011 (2011-10-13) * paragraph [0021] - paragraph [0023] * * paragraph [0026] - paragraph [0027] * * paragraph [0033] - paragraph [0034] * * paragraph [0036] - paragraph [0040] * ----- | 1,9-11 | TECHNICAL FIELDS SEARCHED (IPC) G09G G01J |
| A | WO 2006/088683 A1 (EASTMAN KODAK CO [US]; EDGE CHRISTOPHER [US]) 24 August 2006 (2006-08-24) * page 1, line 12 - page 4, line 7 * * page 7, line 5 - line 32 * ----- -/-- | 1-11 | H04N G06F |

The present search report has been drawn up for all claims

| Place of search | Date of completion of the search | Examiner |
|---|---|---|
| The Hague | 23 April 2015 | Lim, Johan |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

Europäisches
Patentamt

European
Patent Office

Office européen
des brevets

# EUROPEAN SEARCH REPORT

**Application Number**

EP 14 30 6548

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2005/021258 A1 (FASCIANO PETER [US]) 27 January 2005 (2005-01-27) <br> * page 1, line 12 - page 4, line 7 * <br> * page 7, line 5 - line 32 * <br> * paragraph [0004] * <br> * paragraph [0024] - paragraph [0032] * <br> * paragraph [0044] * <br> * paragraph [0130] * <br> ----- | 1-11 | |
| A | US 2010/026702 A1 (HERBERT FRANZ H [AT] ET AL) 4 February 2010 (2010-02-04) <br> * paragraph [0005] * <br> * paragraph [0025] - paragraph [0028] * <br> ----- | 1-11 | |

TECHNICAL FIELDS
SEARCHED (IPC)

The present search report has been drawn up for all claims

| Place of search | Date of completion of the search | Examiner |
|---|---|---|
| The Hague | 23 April 2015 | Lim, Johan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................
& : member of the same patent family, corresponding
    document

EPO FORM 1503 03.82 (P04C01)

**EP 3 002 748 A1**

## ANNEX TO THE EUROPEAN SEARCH REPORT
## ON EUROPEAN PATENT APPLICATION NO.

EP 14 30 6548

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2015

| Patent document cited in search report | | Publication date | Patent family member(s) | | Publication date |
|---|---|---|---|---|---|
| US 2013222412 | A1 | 29-08-2013 | NONE | | |
| US 2013154903 | A1 | 20-06-2013 | KR 20130067917 A | | 25-06-2013 |
| | | | US 2013154903 A1 | | 20-06-2013 |
| US 5579031 | A | 26-11-1996 | DE 69324899 D1 | | 17-06-1999 |
| | | | DE 69324899 T2 | | 21-10-1999 |
| | | | EP 0604755 A1 | | 06-07-1994 |
| | | | JP 3436402 B2 | | 11-08-2003 |
| | | | JP H0777954 A | | 20-03-1995 |
| | | | US 5579031 A | | 26-11-1996 |
| US 2011249015 | A1 | 13-10-2011 | US 2011249015 A1 | | 13-10-2011 |
| | | | US 2014071468 A1 | | 13-03-2014 |
| WO 2006088683 | A1 | 24-08-2006 | EP 1856905 A1 | | 21-11-2007 |
| | | | JP 4633806 B2 | | 23-02-2011 |
| | | | JP 2008530952 A | | 07-08-2008 |
| | | | WO 2006088683 A1 | | 24-08-2006 |
| US 2005021258 | A1 | 27-01-2005 | US 2005021258 A1 | | 27-01-2005 |
| | | | WO 2005011287 A2 | | 03-02-2005 |
| US 2010026702 | A1 | 04-02-2010 | NONE | | |

EPO FORM P0459

For more details about this annex : see Official Journal of the European Patent Office, No. 12/82

**EP 3 002 748 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *ITU-R Recommendation BT.709 for HDTV or sRGB specification -IEC 61966-2-1,* 1999

- **SABINE SÜSSTRUNK et al.** *Standard RGB Color Spaces,* 1999